# EUROPÄISCHE PATENTSCHRIFT

(11) **EP 3 405 685 B1**
(45) Veröffentlichungstag und Bekanntmachung des Hinweises auf die Patenterteilung: **07.10.2020**
(21) Anmeldenummer: 17701459.4
(22) Anmeldetag: 20.01.2017
(51) Int. Cl.: F16B 13/08

(54) **BEFESTIGUNGSVORRICHTUNG**
FASTENING DEVICE
DISPOSITIF DE FIXATION

(30) Priorität: 22.01.2016 DE 202016100310 U
(43) Veröffentlichungstag der Anmeldung: 28.11.2018
(73) Patentinhaber: Technical Solutions GmbH, 84307 Eggenfelden (DE)
(72) Erfinder: WERNER, Rüdel, 84307 Eggenfelden (DE)
(74) Vertreter: Lichtnecker, Markus Christoph
(86) Internationale Anmeldenummer: PCT/EP2017/051248
(87) Internationale Veröffentlichungsnummer: WO 2017/125587

(56) Entgegenhaltungen:
- EP-A1- 0 306 681
- WO-A1-2008/052313
- DE-A1- 2 816 544
- DE-A1- 19 531 693
- DE-A1- 19 857 403
- FR-A1- 2 217 579
- GB-A- 2 150 248
- US-A- 3 427 919
- US-A- 4 193 246

## Beschreibung

### Technisches Gebiet

Die Erfindung betrifft eine Befestigungsvorrichtung zum Einführen in eine Aussparung, insbesondere Bohrloch, umfassend eine Basis mit zumindest einem Verbindungsabschnitt und wenigstens ein relativ zum Verbindungsabschnitt bewegliches Halteelement. In einer Einführstellung des Halteelements ist der Gesamtquerschnitt aus Verbindungsabschnitt und Halteelement gleich dem oder kleiner als der Durchmesser der Aussparung. Beim Angreifen einer entgegen der Einführrichtung gerichteten Kraft wird der Gesamtquerschnitt aus Verbindungsabschnitt und Halteelement durch eine Relativbewegung zwischen Halteelement und Verbindungsabschnitt derart vergrößert, dass die Befestigungsvorrichtung in einer Haltestellung des Halteelements kraftschlüssig an einer Wandung der Aussparung anliegt.

### Stand der Technik

Eine derartige Befestigungsvorrichtung ist als Steckdübel grundsätzlich bekannt, beispielsweise aus DE 198 57 403 A1. Das Halteelement ist hierbei über einen bandförmigen Materialstreifen mit dem Dübel verbunden. Der Materialstreifen gestaltet die Herstellung vergleichsweise aufwändig und kostenintensiv. Auch ist der im Spritzgussverfahren hergestellte Steckdübel nur bedingt hitzebeständig und nicht für das Tragen großer Lasten geeignet.

Beispielsweise bei der Befestigung von Hängedecken, Rohrleitungen oder Lüftungskanälen muss jedoch eine hohe Tragkraft gewährleistet sein. Ferner muss hohen Anforderungen an den Brandschutz genüge geleistet werden.

GB 2 150 248 A, US 3 427 919 A, FR 2 217 579 A1, EP 0 306 681 A1, DE 195 31 693 A1 und WO 2008/052313 A1 offenbaren als Keile ausgebildete Halteelemente. Die Kontaktflächen der Halteelemente sind jedoch nicht gebogen.

US 4 193 246 A offenbart kugelförmige Halteelemente.

DE 28 16 544 A1 offenbart einen Verankerungsbolzen mit einem schraubenförmigen Verriegelungselement.
Beim Trockenbau kommen zum Abhängen von Decken bisher so genannte Deckennägel zum Einsatz. Hierbei wird ein Keil mit Hilfe eines Hammers in Einführrichtung eingeschlagen. Der Gesamtdurchmesser des Dübels vergrößert sich, sodass der Dübel in der Aussparung hält. Eine ähnliche Funktionalität weist ein so genannter Schnellanker auf. Hierbei wird eine geschlitzte Hülse eingeschlagen, welche sich im Bohrloch aufspreizt.

Nachteilig an diesen Befestigungsvorrichtungen ist, dass diese zum Teil vorne einen vergleichsweise großen Durchmesser aufweisen, was ein Einstecken in eine Aussparung erschwert. Zudem halten diese Befestigungsvorrichtungen teilweise nicht richtig. Vor allem gestaltet sich jedoch die Montage aufwändig und zeitintensiv, da gleichzeitig ein Abhängesystem sowie eine Befestigungsvorrichtung gehalten und mit dem Hammer eine Auslösung der Befestigungsvorrichtung erfolgen muss. Ein Monteur muss folglich mit beiden Händen gleichzeitig an der Decke über Kopf hantieren.
Ferner muss stets darauf geachtet werden, dass die Befestigungsvorrichtung nicht zu tief in der Decke montiert wird. In eine Betondecke eingelassenes Eisen wird in der Regel nach etwa 50 mm erreicht, wobei dieses aufgrund von Schwankungen auch schon früher, z.B. nach ca. 40 mm, unter der Decke liegen kann. Wird das Eisen versehentlich angebohrt, können sich Probleme hinsichtlich der Statik ergeben.

### Darstellung der Erfindung

Es ist daher eine Aufgabe der Erfindung, eine einfach zu handhabende Befestigungsvorrichtung bzw. ein einfach zu handhabendes Abhängesystem zu schaffen, welche/s eine geringe Eindringtiefe aufweist.

Die Lösung dieser Aufgabe erfolgt durch Vorrichtungen bzw. Verfahren mit den Merkmalen der jeweils unabhängigen Ansprüche.

Erfindungsgemäß sind das Halteelement und der Verbindungsabschnitt in der Einführstellung über ein lösbares Verbundmittel miteinander verbunden und in der Haltestellung voneinander gelöst. Alternativ oder zusätzlich sind das Halteelement und der Verbindungsabschnitt über eine Kulissenführung miteinander verbunden oder verbindbar.

Das Halteelement ist als Keil ausgebildet. Eine Kontaktfläche des Halteelements ist gebogen.

Vorzugsweise weist die Befestigungsvorrichtung beim Einführen überall denselben Durchmesser auf, d.h. ein Einstecken in eine Aussparung ist problemlos möglich. Es ist jedoch auch denkbar, dass z.B. das Halteelement zumindest bereichsweise vorsteht, d.h. der Gesamtquerschnitt aus Verbindungsabschnitt und Halteelement kann im Bereich des Halteelements auch größer sein.

Die Befestigungsvorrichtung verklemmt sich erfindungsgemäß von selbst in der Aussparung. Dadurch, dass sich das Halteelement durch eine entgegen der Einführrichtung gerichtete Kraft relativ zum Verbindungsabschnitt verschiebt, vergrößert sich der Gesamtquerschnitt aus Verbindungsabschnitt und Halteelement. Durch ein einfaches Ziehen entgegen der Einführrichtung fixiert sich die Befestigungsvorrichtung somit in der Aussparung und hält dort von selbst. Der Einsatz beispielsweise eines Hammers ist nicht notwendig. So wird eine einfach zu handhabende, werkzeuglose Montage ermöglicht. Auf diese Weise kann die Befestigungsvorrichtung einfacher und schneller als z.B. ein Deckennagel oder ein Schnellanker montiert werden.

Dies ist insbesondere beim Trockenbau vorteilhaft, wenn eine Vielzahl an Abhängesystemen zum Abhängen einer Decke, von Rohrleitungen oder Lüftungskanälen befestigt werden muss. Derartige Abhängesysteme werden auch als Nonius bezeichnet. Ein Abhängesystem, welches über eine erfindungsgemäße Befestigungsvorrichtung verfügt bzw. damit verbunden ist, wird lediglich in ein Bohrloch in der Decke eingeführt und anschließend entgegengesetzt zur Einführrichtung zurückgezogen. Das Halteelement verschiebt sich hierbei und verklemmt die Befestigungsvorrichtung sicher, insbesondere schwerkraftgesichert, im Bohrloch. Das Abhängesystem kann auf diese Weise schnell und einfach mit einer Hand montiert werden.

Die Befestigungsvorrichtung ist sowohl für ungerissenen als auch gerissenen Beton geeignet. Aus Brandschutzgründen wird gefordert, dass ein Abhängesystem auch bei einer Erweiterung des Bohrlochs bis 0,3 mm hält. Die erfindungsgemäße Befestigungsvorrichtung setzt bei einem Riss gegebenenfalls etwas nach, hält jedoch durch die Selbsthemmung noch bis zu einem bestimmten Maß.

Neben einer vertikalen Anbringung kann die Befestigungsvorrichtung auch zu einer waagrechten Befestigung dienen. Die Einführrichtung ist in diesem Fall nicht senkrecht sondern seitlich. Auch eine Befestigung in einer schräg verlaufenden Aussparung ist grundsätzlich möglich.

Die Befestigungsvorrichtung kann für verschiedenste Anwendungen eingesetzt werden. So können z.B. Krampen, Haken, Ösen oder dergleichen befestigt werden.

Auch kann z.B. eine schnelle, insbesondere lösbare, Befestigung eines Schraubstocks an Aussparungen einer Werkbank erfolgen.

Zudem sind Anwendungen in der Möbelindustrie möglich.

Ferner ist auch ein Einsatz im Klettersport zur Befestigung von Kletterhaken, Felshaken, Klettergriffen oder dergleichen denkbar.

Auch können große Bauteile befestigt werden. So kann die Befestigungsvorrichtung beispielsweise zum zumindest vorübergehenden Befestigen großer Lasten an einem Kran verwendet werden. Insbesondere können hierbei zwei oder mehr Befestigungsvorrichtungen, vorzugsweise von oben, in Aussparungen der Last eingebracht werden. Auf diese Weise können Seile oder Spanngurte, welche anderenfalls unter die Last gebracht werden müssten, entfallen.

Zum Lösen kann das Halteelement durch eine entgegengesetzte Krafteinwirkung, z.B. einen Hammerschlag von unten oder oben, wieder gelöst werden.

Die Befestigungsvorrichtung eignet sich zum Einbringen in sämtliche Materialien, z.B. Holz, Beton, Mauerstein oder Fels.

Die Befestigungsvorrichtung eignet sich, je nach Anwendung, einerseits zur permanenten und andererseits zur vorübergehenden, lösbaren Befestigung.

Nach einer Ausführungsform der Erfindung sind das Halteelement und der Verbindungsabschnitt in der Einführstellung über ein lösbares Verbundmittel miteinander verbunden und in der Haltestellung voneinander gelöst. Das Verbundmittel ist in der Einführstellung insbesondere zwischen dem Halteelement und dem Verbindungsabschnitt angeordnet. Das Verbundmittel erleichtert das Einführen der Befestigungsvorrichtung in die Aussparung, da das Halteelement am Verbindungsabschnitt in der Einführstellung gehalten wird. Insbesondere verhindert das Verbundmittel in der Einführstellung eine Relativbewegung zwischen Halteelement und Verbindungsabschnitt. In der Haltestellung werden das Halteelement und der Verbindungsabschnitt jedoch nicht mehr durch das Verbundmittel miteinander verbunden, sondern lediglich über Klemmkräfte aneinander gedrückt. Ohne die Klemmkräfte könnten sich das Halteelement und der Verbindungsabschnitt in diesem gelösten Zustand frei bewegen und würden nicht aneinander haften.

Bei dem Verbundmittel kann es sich z.B. um Wachs, Harz, einen Kleber, eine Hülse und/oder einen O-Ring handeln. Eine Hülse oder ein O-Ring kann über den Außenumfang des Verbindungsabschnitts und des Halteelements gespannt werden, um diese Teile aneinander zu fixieren. Insbesondere kann die Hülse bzw. der O-Ring im nichtgedehnten Zustand einen kleineren Durchmesser als die Basis aufweisen, d.h. diese sind auf das Halteelement zu vorgespannt, um einen festen Halt zu gewähren.

Durch Angreifen einer entgegen der Einführrichtung gerichteten Kraft reißt sich das Halteelement vom Verbundmittel los und kann sich somit relativ zum Verbindungsabschnitt bewegen. So kann sich das Halteelement z.B. vom Wachs, Harz oder Kleber lösen oder aus der Hülse bzw. dem O-Ring herausschieben.

Der Begriff Hülse ist hierbei breit zu verstehen und umfasst neben vollständig geschlossenen Hülsen auch z.B. geschlitzte Hülsen. Die Hülse muss sich somit nicht um den gesamten Umfang erstrecken.

Alternativ oder zusätzlich können das Halteelement und der Verbindungsabschnitt über eine Kulissenführung miteinander verbunden sein. Vorzugsweise kann der Verbindungsabschnitt eine T-Nut oder eine schwalbenschwanzförmige Nut umfassen, in welcher ein Kulissenstein des Halteelements geführt ist. Alternativ kann auch das Halteelement eine T-Nut oder eine schwalbenschwanzförmige Nut aufweisen, in welcher ein Kulissenstein des Verbindungsabschnitts aufgenommen ist. Das Halteelement und der Verbindungsabschnitt sind auf diese Weise sicher miteinander verbunden. Das Halteelement kann sowohl in der Einführstellung als auch in der Haltestellung mit dem Verbindungsabschnitt verbunden sein. Das Halteelement kann in der Haltestellung jedoch auch von der Kulissenführung gelöst sein.

Die Kulissenführung kann, ebenso wie die Form des Verbindungsabschnitts selbst, beispielsweise im Stauchverfahren erzeugt werden. So kann z.B. eine von einer Drahtrolle stammende Basis entsprechend gestaucht werden, um einen Verbindungsabschnitt mit einer Nut bzw. mit einem Kulissenstein auszubilden.

Sämtliche erfindungsgemäßen Verbindungen zwischen dem Halteelement und dem Verbindungsabschnitt haben den Vorteil, dass zur Verankerung lediglich eine geringe Eindringtiefe notwendig ist. Anders als bei bekannten Befestigungsvorrichtungen steht an einem oberen Stirnbereich nämlich beispielsweise kein bandförmiger Materialstreifen vor, welcher zusätzlichen Platz benötigt. Eine geringe Aussparungstiefe ist somit ausreichend, wodurch etwa die Gefahr, Eisen anzubohren, minimiert wird. Auch ist die Befestigungsvorrichtung für dünne Decken geeignet.

Insbesondere oder alternativ umfasst ein Kontaktbereich zwischen dem Verbindungsabschnitt und dem Halteelement keine ebene Fläche oder ist nicht als ebene Fläche ausgebildet.

Der Verbindungsabschnitt und das Halteelement liegen demnach insbesondere zumindest nicht durchgehend flächig aufeinander. Der Kontaktbereich wird vorzugsweise möglichst klein gehalten. Erfindungsgemäß ist die Kontaktfläche des Halteelements z.B. konvex oder konkav, gebogen, dies kann zusätzlich auch für die Kontaktfläche des Verbindungsabschnitts gelten. Als Kontaktbereich können lediglich Schienen verbleiben, auf denen das Halteelement bewegt wird. Auch kann die Kontaktfläche des Halteelements bombiert, also in Längsrichtung abgerundet, sein.

Ferner ist denkbar, dass die Kontaktfläche des Halteelements abgewinkelt ist. So kann ein vorderer Bereich des Halteelements, erfindungsgemäß eines Keils, gebogen sein. Vorzugsweise kann das Material im vorderen Bereich des Halteelements dünner sein. Durch die Winkelung kann das Halteelement federnd ausgebildet sein und bietet somit ein gutes Rückstellvermögen. Das Halteelement kann durch die Winkelung insbesondere etwas seitlich vorstehen. Beim Einführen biegt sich das Halteelement in Richtung Verbindungsabschnitt, sodass die Befestigungsvorrichtung in die Aussparung eingeführt werden kann. Beim Zurückziehen wird das Halteelement durch die Federung zusätzlich fixiert. Insbesondere kann die Bohrlochtoleranz dadurch erhöht werden. Dies ist beispielsweise dann vorteilhalft, wenn gleichmäßige Bohrlochmaße aufgrund von Verschleißerscheinungen eines Bohrkopfes nicht mehr gewährleistet sind.

Alternativ oder zusätzlich zu einer Biegung des Halteelements kann auch ein separates Federelement, z.B. eine Spiralfeder, vorgesehen sein, welches zwischen der Kontaktfläche des Halteelements und der Kontaktfläche des Verbindungsabschnitts angeordnet ist. Dies ist insbesondere bei größeren Ausführungen denkbar. Das Federelement wirkt in ähnlicher Weise wie ein gebogenes Halteelement.

Auch können die Kontaktflächen des Halteelements, also des Keils, und des Verbindungsabschnitts jeweils eine unterschiedliche Neigung aufweisen. Im Kontaktbereich liegen das Halteelement und der Verbindungsabschnitt somit nicht eben aufeinander. Durch die unterschiedlichen Neigungen verkürzt sich der Weg des Halteelements, bis sich dieses in der Aussparung verklemmt.

Durch den nicht-ebenen Kontaktbereich kann die Tiefe der Aussparung verringert werden.

Die Basis und/oder das Halteelement können aus Kunststoff, Metall, z.B. Stahl, Eisen, Messing, Aluminium, oder einem Verbundwerkstoff gefertigt sein. Insbesondere kann das Material feuerfest und/oder hitzebeständig sein, um die Anforderungen an den Brandschutz zu genügen. Die erfindungsgemäßen Verbindungen zwischen dem Halteelement und dem Verbindungsabschnitt sind auch alle für hitzebeständige Materialien wie Metall geeignet, im Gegensatz zu bandförmigen Materialstreifen, welche herstellungsbedingt stets aus Kunststoff gefertigt und somit nur eingeschränkt für das Abhängen von Decken, Rohrleitungen oder Lüftungskanälen geeignet sind.

Vorzugsweise können das Halteelement und/oder der Verbindungsabschnitt in einem Bereich, in welchem sich diese berühren bzw. relativ zueinander bewegen, mit einem reibungserniedrigten Belag beschichtet sein. Dies führt zu einem verbesserten Gleiten und verkürzt auf diese Weise den Weg bis zur Selbstfixierung noch weiter. Die Tiefe der Aussparung kann somit noch geringer gewählt werden.

Insbesondere können zwei, drei, vier oder mehr Verbindungsabschnitte, beispielsweise an gegenüberliegenden Seiten der Basis, angeordnet sein. Auch kann die Basis im Bereich des Verbindungsabschnitts oder der Verbindungsabschnitte trichterförmig oder kegelförmig ausgebildet sein. Pro Verbindungsabschnitt kann ein oder können mehrere Halteelemente vorgesehen sein.

Weiterbildungen der Erfindung sind auch den abhängigen Ansprüchen, der Beschreibung sowie den beigefügten Zeichnungen zu entnehmen.

Gemäß einer Ausführungsform sind das Halteelement und der Verbindungsabschnitt in der Einführstellung über eine Hülse und/oder einen O-Ring miteinander verbunden. Die Hülse bzw. der O-Ring bildet hierbei ein lösbares Verbundmittel. Die Hülse bzw. der O-Ring kann vorzugsweise elastisch ausgebildet sein.

Insbesondere ist die Hülse bzw. der O-Ring in der Haltestellung außerhalb der Aussparung angeordnet. Auf diese Weise kann die Hülse bzw. der O-Ring beispielsweise als Markierung dienen. Da Abhängesysteme zur Deckenbefestigung überprüft werden müssen, ob diese fest in der Decke verankert sind, kann die Hülse bzw. der O-Ring nach dem Prüfen verschoben werden. So kann aufgrund der Position der Hülse bzw. des O-Rings schnell festgestellt werden, welches Abhängesystem schon geprüft wurde und welches nicht. Zur besseren Sichtbarkeit kann die Hülse bzw. der O-Ring neben weiß, grau oder schwarz auch eine andere Farbe aufweisen, z.B. blau, rot, grün, gelb, orange usw. Die Hülse bzw. der O-Ring erfüllt somit eine Doppelfunktion, da er nicht nur als Verbundmittel sondern auch als Markierung dienen kann.

Alternativ oder zusätzlich kann die Hülse bzw. der O-Ring z.B. in Form einer, insbesondere trompetenförmigen, Tülle als Abdichtung dienen. So kann die Befestigungsvorrichtung beispielsweise auch in Reinräumen bei Über- und/oder Unterdruck eingesetzt werden. Ohne eine Abdichtung kann nämlich bei Unterdruck Sand aus der Aussparung in den Reinraum gelangen. Die Hülse bzw. der O-Ring kann durch die abdichtende Wirkung ein Herunterfallen von Sand verhindern.

Gemäß einer weiteren Ausführungsform erstreckt sich der Verbindungsabschnitt von einer Kerbe der Basis aus und weist zumindest in einem Teilbereich einen kleineren Durchmesser auf als die restliche Basis. Der Verbindungsabschnitt kann insbesondere keilförmig, trichterförmig oder kegelförmig ausgebildet sein, wobei vorzugsweise das schmale Ende zur Kerbe gerichtet ist. Ein keilförmiger Verbindungsabschnitt wird beispielsweise durch Materialabtrag erzeugt, indem ein entsprechendes Keilstück aus der Basis abgetragen, z.B. gefräst, wird. Alternativ kann die Basis auch bereits mit einem fehlenden Keilstück hergestellt werden, z.B. im Gussverfahren. Entsprechend kann auch die Kerbe in die Basis gefräst bzw. die Basis bereits mit Kerbe hergestellt sein.

Nach einer weiteren Ausführungsform ist am Übergang von der Kerbe zum Verbindungsabschnitt ein abgerundeter Bereich oder eine Kante vorgesehen. Ein abgerundeter Bereich ist stabiler und stärkt das Material, sodass die maximale Tragkraft erhöht wird. Durch eine, insbesondere scharfe, Kante am Übergang kann hingegen eine Sollbruchstelle definiert werden.

Erfindungsgemäß ist das Halteelement als Keil ausgebildet. Das Halteelement kann somit ein Vieleck bilden. Vorzugsweise ist das Halteelement als Keil ausgebildet, während auch der Verbindungabschnitt keilförmig ist. Das Halteelement ergänzt somit in der Einführstellung das fehlende Keilstück der Basis. Insbesondere kann die einer Wandung zugewandte Außenfläche des Keils abgerundet sein. Das Halteelement und der Verbindungsabschnitt bilden gewissermaßen zwei schräg konvergierende Flächen.

Das Halteelement kann als Kurzkegel oder Steilkegel ausgebildet sein.
Der Keil kann zur Befestigung eines Deckenabhängesystems eine Länge von etwa 10 mm bis 20 mm, vorzugsweise von ca. 15 mm aufweisen. So wird eine geringe Bohrlochtiefe sichergestellt.

Die Länge des Halteelements beeinflusst insbesondere die Bohrlochtoleranz. Ein Längeres Halteelement kann sich auch in Bohrlöchern mit größerem Durchmesser noch sicher verkeilen.

Nach einer weiteren Ausführungsform weist die mit der Wandung der Aussparung in Kontakt tretende Außenfläche des Halteelements einen höheren Reibungskoeffizienten auf als die mit der Wandung der Aussparung in Kontakt tretende Außenfläche des Verbindungsabschnitts. Greift eine entgegen der Einführrichtung gerichtete Kraft an, so bleibt das Halteelement aufgrund der Reibung an der Wandung der Aussparung hängen. Der Verbindungsabschnitt gleitet hingegen an der Wandung nach unten ab. Es entsteht folglich eine Relativbewegung zwischen Halteelement und Verbindungsabschnitt, was zu einer Vergrößerung des Gesamtdurchmessers und zu einer Fixierung der Befestigungsvorrichtung führt.

Gemäß einer weiteren Ausführungsform weist das Halteelement zumindest abschnittsweise eine aufgeraute und/oder gummierte Oberfläche auf. Insbesondere kann die mit der Wandung der Aussparung in Kontakt tretende Außenfläche des Halteelements aufgeraut und/oder gummiert sein. Die Oberfläche, z.B. eine Außenfläche eines Keils, kann geriffelt und/oder gerillt sein, beispielsweise in Längs- und/oder Querrichtung. Der Reibungskoeffizient kann auf diese Weise erhöht werden.

Auch die Außenseite des Verbindungsabschnitts kann aufgeraut und/oder gummiert sein. Jedoch ist es vorteilhaft, wenn diese glatt ist, damit die Gleiteigenschaften nicht eingeschränkt werden. Ferner kann auch die Oberfläche des Halteelements glatt sein.

Gemäß einer weiteren Ausführungsform weist der Verbindungsabschnitt an der mit der Wandung der Aussparung in Kontakt tretenden Außenfläche zumindest eine Verdrehsicherung auf. Die Verdrehsicherung kann insbesondere auf einer gegenüberliegenden Seite des Halteelements vorgesehen sein. Bei der Verdrehsicherung kann es sich beispielsweise um einen Vorsprung, z.B. eine Nase, ein Zapfen oder eine Leiste, handeln. Einerseits stützt die Verdrehsicherung die Befestigungsvorrichtung ab, sodass sich diese an beiden Seiten verkeilt. Andererseits verhindert diese ein Verdrehen der Befestigungsvorrichtung in der Aussparung. Die Ausrichtung bleibt somit stets gleich.

Nach einer weiteren Ausführungsform ist das Halteelement in Einführrichtung und/oder die Basis entgegen der Einführrichtung vorgespannt. Insbesondere kann ein Federelement vorgesehen sein, welches eine Relativbewegung zwischen Halteelement und Basis bewirkt, z.B. ein Federblech. In der Aussparung wird das Halteelement längs bzw. schräg relativ zum Verbindungsabschnitt verschoben und gelangt somit mit der Wandung der Aussparung in Kontakt. Das Federelement kann zwischen dem Halteelement und der Kerbe der Basis, von welcher sich der Verbindungsabschnitt aus erstreckt, angeordnet sein. Alternativ oder zusätzlich kann das Federelement auch an einem Stirnbereich der Basis vorgesehen sein und die Basis entgegengesetzt zur Einführrichtung bewegen. Als Federelement kann beispielsweise eine Spiralfeder oder ein Gummidämpfer dienen. Auch kann beispielsweise ein Federblech unterhalb des Halteelements vorgesehen sein. Dieses kann z.B. bei einem Kontakt mit der Wand bzw. der Decke aktiviert werden und das Halteelement fixieren.

Gemäß einer weiteren Ausführungsform kann das Halteelement in der Haltestellung durch ein Spannmittel verspannbar sein. Als Spannmittel kann z.B. eine Madenschraube vorgesehen sein. Diese kann insbesondere im Inneren der Basis geführt sein. Die Basis kann dabei beispielsweise als Hohlstift ausgebildet sein. Das Spannmittel kann mit einem Werkzeug, z.B. einem Inbusschlüssel, verschraubt werden, um das Halteelement in der Haltestellung zu verspannen.

Nach einer weiteren Ausführungsform kann die Basis ein Fixiermittel umfassen, welches dazu ausgebildet ist, ein ungewolltes Lösen der Befestigungsvorrichtung zu verhindern. Das Fixiermittel kann in einem Bereich unterhalb des Verbindungsabschnitts angeordnet sein. Insbesondere kann dieses derart verstellt werden, dass es, wenn sich das Halteelement in der Haltestellung befindet, an einem die Aussparung umgebenden Randbereich, z.B. an einer Decke, anliegt. So löst sich die Befestigungsvorrichtung nicht ungewollt, wenn beispielsweise Vibrationen oder Erschütterungen auftreten. Auf diese Weise wird die Befestigungsvorrichtung zusätzlich gesichert. Bei dem Fixiermittel kann es sich insbesondere um eine Schraubenmutter handeln, welche an einem Außengewinde der Basis verstellt werden kann. Alternativ kann das Fixiermittel auch einen Splint umfassen, welcher z.B. in eine Bohrung in der Basis gesteckt werden kann. Auch ein Sicherungsring, eine Hülse oder ein O-Ring kann als Fixiermittel dienen.

Nach einer weiteren Ausführungsform weist die Basis zusätzlich zum Verbindungsabschnitt eine weitere, insbesondere umlaufende, als Verbiegebereich dienende Hinterschneidung auf. Durch die Hinterschneidung ist das Material geschwächt. Ferner steht Platz zur Verformung zur Verfügung. Die Hinterschneidung kann vorzugsweise an einer gegenüberliegenden Seite des Halteelements vorgesehen sein. Durch die Bewegung des Halteelements kann sich somit ein Teil der Basis in den Verbiegebereich hinein verbiegen und für eine zusätzliche Abstützung an der Wandung der Aussparung sorgen.

Gemäß einer weiteren Ausführungsform weist die Basis an einem Stirnbereich einen, insbesondere umlaufenden, Vorsprung auf. Der Vorsprung kann insbesondere radial vorstehen und z.B. einen Pilzkopf bilden. Alternativ kann der Vorsprung auch als spitze Kante ausgebildet sein. Der Vorsprung kann sich vorzugsweise deformieren, in den Verbiegebereich hinein gebogen werden und sich an der Wandung der Aussparung zusätzlich verklemmen.

Nach einer weiteren Ausführungsform weist die Basis an einem vom Verbindungsabschnitt abgewandten Endbereich ein Gewinde auf. Die Unterseite der Basis kann somit zur Befestigung z.B. mit einem Schaft eines Abhängesystems dienen. Das Gewinde kann als Innen- oder Außengewinde ausgebildet sein. Insbesondere vergrößert das Gewinde nicht den Durchmesser der Basis. Ein Außengewinde der Basis kann zugleich auch zur Befestigung eines Fixiermittels dienen.

Es ist auch denkbar, dass eine Befestigungsvorrichtung zum Einführen in eine Aussparung eine Basis umfasst, die, vorzugsweise an einem Stirnbereich, ein Behältnis und/oder eine Aufnahmeaussparung, insbesondere eine Sicke, eine Nut und/oder ein Halbrund, zur Aufnahme eines Behältnisses umfasst. Das Behältnis kann beispielsweise ein Befestigungsmittel, z.B. einen Kleber oder ein Harz, aufweisen. Alternativ oder zusätzlich kann das Behältnis ein feuerhemmendes Material und/oder ein Löschmittel umfassen. Das Behältnis kann z.B. als eine Ampulle oder Kartusche ausgebildet sein. Vorzugsweise ist das Behältnis irreversibel öffenbar. Insbesondere kann das Behältnis aus Glas ausgebildet sein. Das Behältnis kann fest mit der Aufnahmeaussparung verbunden, z.B. verklebt, sein.

Wird die Basis in eine Aussparung eingeführt, schlägt das Behältnis am Ende der Aussparung an und zerbricht. Das im Behältnis enthaltene Mittel tritt daraufhin aus. Handelt es sich hierbei z.B. um ein Klebemittel, wird die Basis dadurch in der Aussparung gehalten.

Für diesen Aspekt wird auch unabhängig von einem Verbindungsabschnitt und einem relativ dazu bewegbaren Halteelement Schutz beansprucht. In Kombination mit einem beweglichen Halteelement wird der Halt zusätzlich verbessert. So kann das Behältnis beispielsweise zerbrechen, wenn die Befestigungsvorrichtung angezogen wird. Durch das Halteelement ist bereits eine Haltekraft gegeben, sodass nicht gewartet werden muss, bis das Befestigungsmittel aushärtet. Durch das Befestigungsmittel ist die Basis zusätzlich mit z.B. einer Bohrlochleibung verklebt.

Alternativ oder zusätzlich kann die Basis auch zumindest einen Kanal für ein Befestigungsmittel umfassen. Vorzugsweise sind mehrere Kanäle vorgesehen, welche insbesondere seitlich und/oder stirnseitig aus der Basis austreten. Befindet sich die Basis in der Aussparung kann durch den Kanal nachträglich ein Befestigungsmittel eingebracht, z.B. eingespritzt, werden.

Für diesen Aspekt wird auch unabhängig von einem Verbindungsabschnitt und einem relativ dazu bewegbaren Halteelement Schutz beansprucht. In Kombination mit einem beweglichen Halteelement wird der Halt zusätzlich verbessert.

Die Erfindung betrifft auch ein Abhängesystem zur Befestigung einer Decke mit einem Schaft und einer am Schaft angeordneten, erfindungsgemäßen Befestigungsvorrichtung. Der Schaft kann einstückig mit der Befestigungsvorrichtung geformt sein. Auch kann die Befestigungsvorrichtung in den Schaft integriert werden, z.B. im Kaltstauchverfahren. Alternativ kann die Befestigungsvorrichtung mit dem Schaft verschweißt, verklebt, vercrimpt und/oder verschraubt sein.

Gemäß einer Ausführungsform ist am Schaft eine Halterung zum Halten eines Prüfgeräts vorgesehen. Bei dem Prüfgerät kann es sich z.B. um einen speziellen Drehmomentschlüssel handeln. Mit dem Prüfgerät kann die Prüfung bzw. der Nachweis erfolgen, ob die Befestigungsvorrichtung sicher in der Aussparung sitzt. Nach dem Prüfen kann z.B. eine Hülse bzw. ein O-Ring als Markierung verschoben werden.

Die Erfindung betrifft auch ein Verfahren zum Herstellen eines Systems mit einer erfindungsgemäßen Befestigungsvorrichtung und einem Tragelement. Bei dem Tragelement kann es sich insbesondere um einen Schaft, einen Draht, eine Krampe, einen Haken, eine Öse oder ein Seil handeln. Das Tragelement kann einen, insbesondere stabförmigen, Halteabschnitt zur Befestigung an der Befestigungsvorrichtung aufweisen.

Zunächst wird eine Aussparung in die Befestigungsvorrichtung eingebracht, z.B. gebohrt, gestanzt, gefräst, gestaucht, gepresst und/oder abgeschmolzen, beispielsweise im Stumpfschweißverfahren. Anschließend wird ein Halteabschnitt des Tragelements in die Aussparung eingeführt und der Halteabschnitt in der Aussparung befestigt. Die Befestigung kann lösbar oder unlösbar erfolgen. Für eine unlösbare Befestigung kann der Halteabschnitt in der Aussparung z.B. vercrimpt, verschweißt, verklebt und/oder verclincht sein. Eine lösbare Verbindung kann beispielsweise mittels eines Bajonettverschlusses gewährleistet sein.

Durch den modulartigen Aufbau kann dieselbe Befestigungsvorrichtung für unterschiedliche Tragelemente verwendet werden. Die einzelnen Bauteile können jeweils verzinkt sein. Die Zinkschicht wird z.B. beim Vercrimpen nicht beschädigt, sodass Korrosionsschäden vermieden werden. Beim Vercrimpen können insbesondere Kugeln oder Karos verwendet werden, welche die zur Verformung nötige Kraft aufbringen und die Befestigungsvorrichtung von außen mit Druck beaufschlagen. Auch kann eine umlaufende Struktur vorgesehen sein, sodass der Halteabschnitt des Tragelements im Inneren der Befestigungsvorrichtung, vergleichbar mit einem Dübel, entsprechend verrasten kann.

Insbesondere kann das Halteelement, also der Keil, aus der Befestigungsvorrichtung ausgeformt, z.B. ausgestanzt, werden und auf diese Weise den Verbindungsabschnitt schaffen. Das von der Basis abgetragene Material ist auf diese Weise kein Abfallprodukt sondern kann als Halteelement eingesetzt werden. Kosten können dadurch gespart werden.

Alle hier beschriebenen Ausführungsformen der Vorrichtungen sind insbesondere dazu ausgebildet, nach dem hier beschriebenen Verfahren hergestellt zu werden. Ferner können alle hier beschriebenen Ausführungsformen der Vorrichtungen sowie alle hier beschriebenen Ausführungsformen des Verfahrens jeweils miteinander kombiniert werden, insbesondere auch losgelöst von der konkreten Ausgestaltung, in deren Zusammenhang sie erwähnt werden.

### Figurenbeschreibung

Die Erfindung wird im Folgenden beispielhaft unter Bezugnahme auf die Zeichnungen beschrieben, wobei jedoch nicht zu sehen ist, dass eine Kontaktfläche des Halteelements erfindungsgemäß gebogen ist. Es zeigen:
- Fig. 1: eine Schnittansicht einer Ausführungsform einer erfindungsgemäßen Befestigungsvorrichtung,
- Fig. 2A: eine Perspektivansicht einer weiteren Ausführungsform einer erfindungsgemäßen Befestigungsvorrichtung,
- Fig. 2B: eine Vorderansicht der Befestigungsvorrichtung gemäß Fig. 2A,
- Fig. 3: eine Perspektivansicht einer weiteren Ausführungsform einer erfindungsgemäßen Befestigungsvorrichtung,
- Fig. 4: entfernt,
- Fig. 5: entfernt,
- Fig. 6: eine Perspektivansicht einer weiteren Ausführungsform einer erfindungsgemäßen Befestigungsvorrichtung,
- Fig. 7: eine Perspektivansicht einer weiteren Ausführungsform einer erfindungsgemäßen Befestigungsvorrichtung,
- Fig. 8: eine Perspektivansicht einer weiteren Ausführungsform einer erfindungsgemäßen Befestigungsvorrichtung,
- Fig. 9: eine Perspektivansicht einer weiteren Ausführungsform einer erfindungsgemäßen Befestigungsvorrichtung,
- Fig. 10: eine Perspektivansicht einer weiteren Ausführungsform einer erfindungsgemäßen Befestigungsvorrichtung,
- Fig. 11A: eine Perspektivansicht einer weiteren Ausführungsform einer erfindungsgemäßen Befestigungsvorrichtung,
- Fig. 11B: eine Vorderansicht der Befestigungsvorrichtung gemäß Fig. 11A,
- Fig. 12A bis 12C: Schnittansichten einer weiteren Ausführungsform einer erfindungsgemäßen Befestigungsvorrichtung, und
- Fig. 13: eine teilweise geschnittene Perspektivansicht einer weiteren Ausführungsform einer erfindungsgemäßen Befestigungsvorrichtung.

Zunächst ist zu bemerken, dass die dargestellten Ausführungsformen rein beispielhafter Natur sind. Insbesondere kann jeweils ein beliebig ausgebildetes Halteelement verwendet werden. Auch können sämtliche Ausführungsformen mit oder ohne einer Verdrehsicherung oder ein Fixiermittel ausgebildet sein. Die Merkmale einer Ausführungsform können auch beliebig mit Merkmalen einer anderen Ausführungsform kombiniert werden.

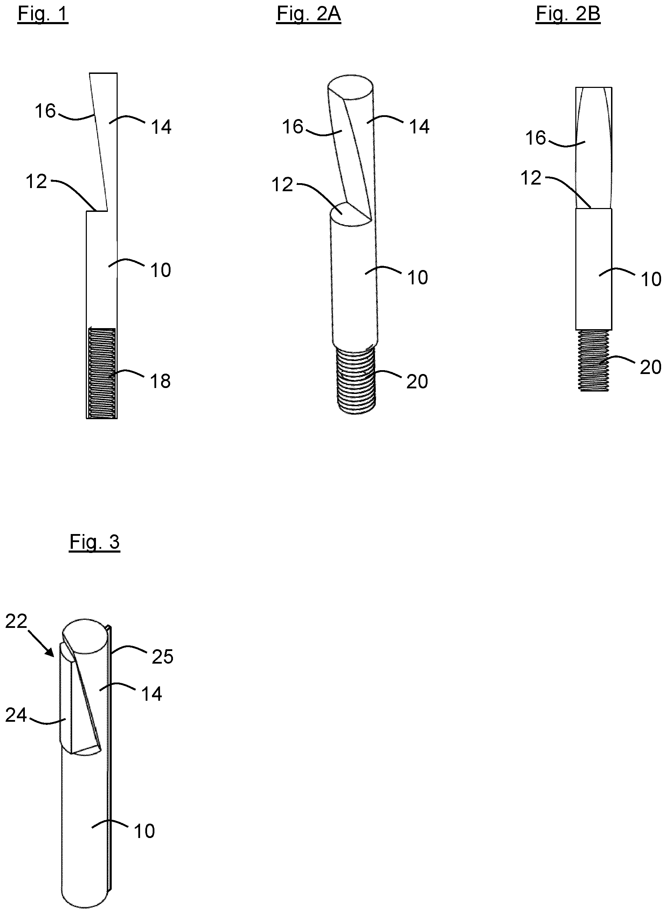

Fig. 1 zeigt eine zylinderförmige Basis 10 einer Befestigungsvorrichtung, welche z.B. in ein zylinderförmiges Bohrloch eingeführt werden kann. Die Basis umfasst eine Kerbe 12, von welcher aus sich ein keilförmiger Verbindungsabschnitt 14 erstreckt. Der Übergangsbereich zwischen der Kerbe 12 und dem Verbindungsabschnitt 14 ist scharfkantig ausgebildet. Alternativ ist auch ein abgeflachter und/oder abgerundeter Übergang möglich.

Der Verbindungsabschnitt 14 weist einen kleineren Querschnitt als die restliche Basis 10 auf. Auf diese Weise wird Platz für ein nicht dargestelltes Halteelement geschaffen. Das Halteelement kann an einer Kontaktfläche 16 des Verbindungsabschnitts 14 anliegen.

Die Basis 10 weist an einem vom Verbindungsabschnitt 14 abgewandten Endbereich ein Innengewinde 18 auf. Über dieses Innengewinde 18 kann die Basis mit einem Bauteil, z.B. einem Schaft eines Abhängesystems, verbunden werden. Im Bereich des Innengewindes 18 weist die Basis 10 keinen größeren Durchmesser auf, sodass ein Einführen in eine Aussparung problemlos möglich ist.

Die Ausführungsform, welche in den Fig. 2A und Fig. 2B dargestellt ist, entspricht im Wesentlichen der Ausführungsform gemäß Fig.1. Zur Befestigung mit einem Bauteil weist die Basis jedoch ein Außengewinde 20 auf. Alternativ zu Schraubverbindungen sind auch Rast-, Klick-, Klebe-, Schweiß- und/oder Lötverbindungen denkbar.

In Fig. 3 ist ein Halteelement 22, welches als Keil 24 ausgebildet ist, mit dem Verbindungsabschnitt 14 verbunden. Der Keil 24 ist in dieser dargestellten Einführstellung über ein Verbundmittel am Verbindungsabschnitt 14 befestigt. So kann z.B. ein Wachs, ein Harz und/oder ein Kleber als Verbundmittel dienen. Auch kann eine Hülse bzw. ein O-Ring vorgesehen sein, welcher für die Verbindung zwischen Halteelement 22 und Verbindungsabschnitt 14 sorgt. Alternativ ist auch eine Kulissenführung zwischen Halteelement und Verbindungsabschnitt möglich.

In der dargestellten Einführstellung ist der Gesamtquerschnitt aus Verbindungsabschnitt 14 und Halteelement 22 gleich dem oder kleiner als der Querschnitt der restlichen Basis 10 bzw. der Aussparung. Die Befestigungsvorrichtung kann somit problemlos in Einführrichtung in die Aussparung eingeführt werden. Wird die Befestigungsvorrichtung nun zurückgezogen, verschiebt sich das Halteelement 22 relativ zum Verbindungsabschnitt 14. Dadurch vergrößert sich der Gesamtquerschnitt und die Befestigungsvorrichtung verkeilt sich in der Aussparung.

Um die Haftreibung zwischen Halteelement 22 und Aussparung zu erhöhen, kann das Halteelement 22 an der der Wandung zugewandten Außenfläche aufgeraut und/oder gummiert sein.

Die Reibung zwischen Halteelement 22 und Verbindungsabschnitt 14 soll hingegen gering gehalten werden. Daher ist die Kontaktfläche des Halteelements erfindungsgemäß gebogen. Auch kann eine Beschichtung im Bereich der Kontaktfläche 16 die Gleiteigenschaften verbessern.

Durch diese Maßnahmen kann die Eindringtiefe in ein Bohrloch verkleinert werden. Die Befestigungsvorrichtung hält somit bereits nach einer kurzen Wegstrecke.

Um ein ungewolltes Verdrehen zu verhindern, kann die Befestigungsvorrichtung optional eine als Leiste 25 ausgebildete Verdrehsicherung aufweisen. Vorzugsweise ist die Verdrehsicherung 25 an der dem Halteelement 22 gegenüberliegenden Seite angeordnet.

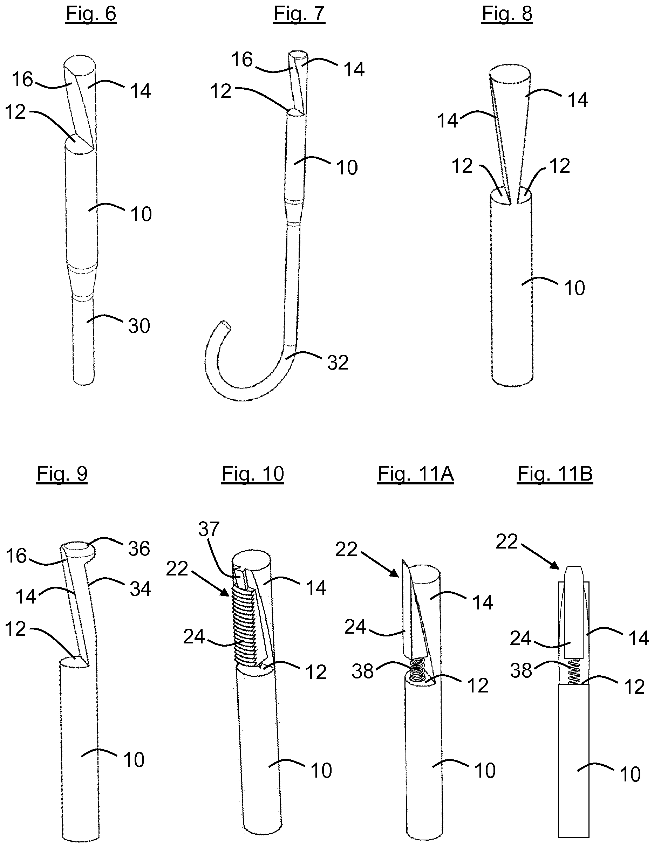

Wie in Fig. 6 dargestellt, kann die Befestigungsvorrichtung mit beliebigen Bauteilen verbunden werden, z.B. mit einem Schaft 30 eines Abhängesystems. Die Basis 10 und der Schaft 30 können hierbei denselben Durchmesser aufweisen. Alternativ kann sich die Basis 10, wie dargestellt, verjüngen. Der Schaft 30 kann mit der Basis 10 beispielsweise im Kaltstauchverfahren verbunden werden.

Die Abhängesysteme können durch die Befestigungsvorrichtung auf einfache Weise montiert werden. Eine einhändige, werkzeuglose Montage ist möglich.

Alternativ können auch, wie in Fig. 7 gezeigt, Haken 32 durch die erfindungsgemäße Befestigungsvorrichtung sicher z.B. in einer Decke verankert werden.

Wie in Fig. 8 dargestellt, können auch zwei Verbindungsabschnitte 14 an gegenüberliegenden Seiten vorgesehen sein. Hierbei können sich zwei Halteelemente relativ zu den Verbindungsabschnitten 14 bewegen und die Befestigungsvorrichtung beidseitig sichern. Der Halt wird dadurch weiter verbessert.

Bei der Ausführungsform, welche in Fig. 9 dargestellt ist, ist eine weitere, als Verbiegebereich dienende Hinterschneidung 34 vorgesehen. Ferner umfasst die Basis an einem Stirnbereich einen als Pilzkopf 36 ausgebildeten Vorsprung.

Bewegt sich ein Halteelement 22 relativ zum Verbindungsabschnitt 14 nach oben, so drückt dieses einerseits an die Wandung der Aussparung. Andererseits wird der Pilzkopf 36 in die Hinterschneidung 34 gedrückt. Der Pilzkopf 36 wird folglich deformiert und verkeilt sich zusätzlich ebenfalls an einer Wandung der Aussparung. Die Befestigungsvorrichtung wird somit an beiden Seiten gehalten.

Bei der Ausführungsform, welche in Fig. 10 dargestellt ist, das Halteelement 22 über eine schwalbenschwanzförmige Kulissenführung 37 mit dem Verbindungsabschnitt 14 verbunden und kann relativ zu diesem bewegt werden. Um einen besseren Halt an einer Wandung der Aussparung zu gewährleisten, kann die Außenfläche des Halteelements 22 geriffelt sein.

Wie in den Fig. 11A und 11B gezeigt ist, kann ein Federelement 38 vorgesehen sein, welches an der Kerbe 12 angeordnet ist. Das Federelement 38 spannt den Keil 24 in Einführrichtung vor und unterstützt die Relativbewegung zwischen Halteelement 22 und Basis 10. Der Weg, bis sich die Befestigungsvorrichtung in der Aussparung verkeilt, wird dadurch verkürzt.

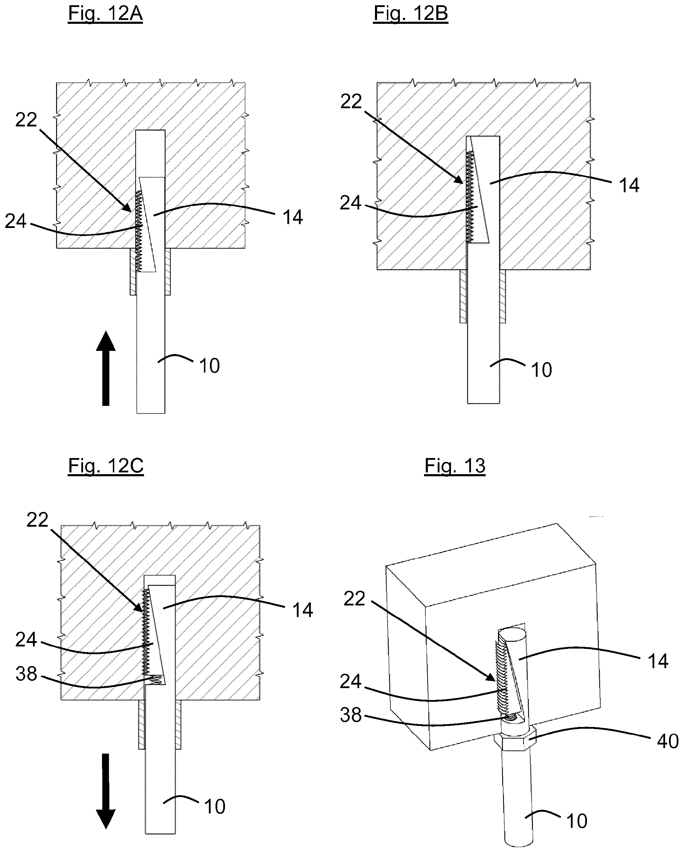

In den Fig. 12A bis 12C ist ein typischer Ablauf dargestellt. Zunächst liegt, wie in Fig. 12A zu sehen ist, das Halteelement 22 an der Kerbe 12 an. Das Federelement 38 ist komprimiert und das Halteelement 22 befindet sich in der Einführstellung. Der Gesamtquerschnitt aus Verbindungsabschnitt 14 und Halteelement 22 ist kleiner als der Durchmesser der Aussparung. Die Befestigungsvorrichtung kann somit in die durch den Pfeil dargestellte Einführrichtung in die Aussparung eingeführt werden.

Bei der Darstellung gemäß Fig. 12B hat die Befestigungsvorrichtung die gewünschte Endposition erreicht. Die Befestigungsvorrichtung kann nun entgegen der Einführrichtung an der Basis 10 gezogen werden.

Wie in Fig. 12C zu sehen ist, entspannt sich das Federelement 38 und schiebt das Halteelement 22 nach oben. Zudem führt die geriffelte Oberfläche des Halteelements 22 dazu, dass das Halteelement 22 an einer höheren Position verbleibt, während sich der Verbindungsabschnitt 14 relativ dazu nach unten bewegt. Durch die Relativbewegung vergrößert sich der Gesamtquerschnitt, sodass das Halteelement 22 schließlich sicher in der Aussparung verklemmt wird.

Gemäß der Ausführungsform, welche in Fig. 13 gezeigt ist, kann an der Basis 10 ein als Mutter 40 ausgebildetes Fixiermittel vorgesehen sein. Das Fixiermittel 40 kann an einem Außengewinde der Basis 10 in Richtung Decke geschraubt werden. Liegt das Fixiermittel 40 fest an der Decke an, so ist die Befestigungsvorrichtung zusätzlich vor einem ungewollten Lösen geschützt, insbesondere beim Auftreten von Vibrationen und/oder Erschütterungen.

### Bezugszeichenliste

- 10: Basis
- 12: Kerbe
- 14: Verbindungabschnitt
- 16: Kontaktfläche
- 18: Innengewinde
- 20: Außengewinde
- 22: Halteelement
- 24: Keil
- 25: Verdrehsicherung, Leiste
- 26: Kugel
- 28: Rolle
- 30: Schaft
- 32: Haken
- 34: Hinterschneidung
- 36: Vorsprung, Pilzkopf
- 37: Kulissenführung
- 38: Federelement
- 40: Fixiermittel

## Patentansprüche

1. Befestigungsvorrichtung zum Einführen in eine Aussparung, insbesondere Bohrloch, umfassend eine Basis (10) mit zumindest einem Verbindungsabschnitt (14) und wenigstens ein relativ zum Verbindungsabschnitt (14) bewegliches Halteelement (22), wobei in einer Einführstellung des Halteelements (22) der Gesamtquerschnitt aus Verbindungsabschnitt (14) und Halteelement (22) gleich dem oder kleiner als der Durchmesser der Aussparung ist und beim Angreifen einer entgegen der Einführrichtung gerichteten Kraft der Gesamtquerschnitt aus Verbindungsabschnitt (14) und Halteelement (22) durch eine Relativbewegung zwischen Halteelement (22) und Verbindungsabschnitt (14) derart vergrößert wird, dass die Befestigungsvorrichtung in einer Haltestellung des Halteelements (22) kraftschlüssig an einer Wandung der Aussparung anliegt, wobei
das Halteelement (22) und der Verbindungsabschnitt (14) in der Einführstellung über ein lösbares Verbundmittel miteinander verbunden und in der Haltestellung voneinander gelöst sind und/oder
das Halteelement (22) und der Verbindungsabschnitt (14) über eine Kulissenführung (37) miteinander verbunden oder verbindbar sind, wobei das Halteelement als Keil (24) ausgebildet ist und
eine Kontaktfläche des Halteelements (22) gebogen ist, wobei die Kontaktfläche einem Kontaktbereich zwischen dem Verbindungsabschnitt (14) und dem Halteelement (22) zugeordnet ist.

2. Befestigungsvorrichtung nach Anspruch 1,
**dadurch gekennzeichnet, dass**
die Kontaktfläche des Halteelements (22), insbesondere ein vorderer Bereich des Halteelements (22), abgewinkelt ist.

3. Befestigungsvorrichtung nach Anspruch 2,
**dadurch gekennzeichnet, dass**
das Halteelement (22) durch die Winkelung federnd ausgebildet ist.

4. Befestigungsvorrichtung nach einem der vorhergehenden Ansprüche,
**dadurch gekennzeichnet, dass**
das Halteelement (22) und der Verbindungsabschnitt (14) in der Einführstellung über eine Hülse und/oder einen O-Ring miteinander verbunden sind, wobei die Hülse und/oder der O-Ring das lösbare Verbundmittel bildet.

5. Befestigungsvorrichtung nach Anspruch 4,
**dadurch gekennzeichnet, dass**
die Hülse und/oder der O-Ring in der Haltestellung außerhalb der Aussparung angeordnet ist und/oder als Markierung dient.

6. Befestigungsvorrichtung nach einem der vorhergehenden Ansprüche,
**dadurch gekennzeichnet, dass**
ein Kontaktbereich zwischen dem Verbindungsabschnitt (14) und dem Halteelement (22) keine ebene Fläche umfasst oder nicht als ebene Fläche ausgebildet ist.

7. Befestigungsvorrichtung nach einem der vorhergehenden Ansprüche,
**dadurch gekennzeichnet, dass**
der Verbindungsabschnitt (14) und das Halteelement (22) zumindest nicht durchgehend flächig aufeinander liegen und/oder dass ein Kontaktbereich zwischen dem Verbindungsabschnitt (14) und dem Halteelement (22) klein gehalten ist.

8. Befestigungsvorrichtung nach einem der vorhergehenden Ansprüche,
**dadurch gekennzeichnet, dass**
eine Kontaktfläche (16) des Verbindungsabschnitts (14) gebogen ist.

9. Befestigungsvorrichtung nach einem der vorhergehenden Ansprüche,
**dadurch gekennzeichnet, dass**
die Befestigungsvorrichtung werkzeuglos montierbar ist.

10. Befestigungsvorrichtung nach einem der vorhergehenden Ansprüche,
**dadurch gekennzeichnet, dass**
die mit der Wandung der Aussparung in Kontakt tretende Außenfläche des Halteelements (22) einen höheren Reibungskoeffizienten aufweist als die mit der Wandung der Aussparung in Kontakt tretende Außenfläche des Verbindungsabschnitts (14), insbesondere wobei das Halteelement (22) zumindest abschnittsweise eine aufgeraute und/oder gummierte Oberfläche aufweist.

11. Befestigungsvorrichtung nach einem der vorhergehenden Ansprüche,
**dadurch gekennzeichnet, dass**
das Halteelement (22) in Einführrichtung und/oder die Basis (10) entgegen der Einführrichtung vorgespannt ist, und/oder
dass das Halteelement (22) in der Haltestellung durch ein Spannmittel verspannbar ist.

12. Befestigungsvorrichtung nach einem der vorhergehenden Ansprüche,
**dadurch gekennzeichnet, dass**
die Basis (10) an einem vom Verbindungsabschnitt (14) abgewandten Endbereich ein Gewinde (18, 20) aufweist, und/oder dass die Basis (10), vorzugsweise an einem Stirnbereich, ein Behältnis und/oder eine Aufnahmeaussparung zur Aufnahme eines Behältnisses umfasst, und/oder
dass die Basis zumindest einen Kanal für ein Befestigungsmittel umfasst.

13. Befestigungsvorrichtung nach einem der vorhergehenden Ansprüche,
**dadurch gekennzeichnet, dass**
die Kulissenführung (37) eine T-Nut oder schwalbenschwanzförmige Nut umfasst.

14. Abhängesystem zur Befestigung einer Decke mit einem Schaft (30) und einer am Schaft (30) angeordneten Befestigungsvorrichtung nach einem der vorhergehenden Ansprüche, insbesondere wobei am Schaft (30) eine Halterung zum Halten eines Prüfgeräts vorgesehen ist.

15. Verfahren zum Herstellen eines Systems mit einer Befestigungsvorrichtung nach einem der Ansprüche 1 bis 13 und einem Tragelement, insbesondere einem Schaft (30), bei dem
eine Aussparung in die Befestigungsvorrichtung eingebracht wird,
ein Halteabschnitt des Tragelements in die Aussparung eingeführt wird, und der Halteabschnitt in der Aussparung, vorzugsweise unlösbar, befestigt, insbesondere vercrimpt, wird.

## Claims

1. Fastening device for insertion into a recess, especially a borehole, comprising a base (10) having at least one connection section (14) and at least one retaining element (22) that moves relative to the connection section (14), wherein, in an insertion position of the retaining element (22), the entire cross-section formed by the connection section (14) and the retaining element (22) is less than or equal to the diameter of the recess, and, when a force directed against the direction of insertion is applied, the entire cross-section formed by the connection section (14) and the retaining element (22) is increased by a relative movement between the retaining element (22) and the connection section (14) in such a way that, in a retaining position of the retaining element (22), the fastening device makes contact in a force-locking manner with a wall of the recess, wherein
the retaining element (22) and the connection section (14) are connected to one another in the insertion position via a detachable connecting means and are not connected to one another in the retaining position and/or
the retaining element (22) and the connection section (14) are connected or connectable to one another via a slotted guide (37), wherein
the retaining element is designed as a wedge (24) and
a contact surface of the retaining element (22) is bent, wherein
the contact surface is assigned to a contact area between the connection section (14) and the retaining element (22).

2. Fastening device according to claim 1,
**characterised in that**
the contact surface of the retaining element (22), especially a front region of the retaining element (22), is angled.

3. Fastening device according to claim 2,
**characterised in that**
the retaining element (22) is resiliently configured due to the angulation.

4. Fastening device according to any of the preceding claims,
**characterised in that**
the retaining element (22) and the connection section (14) are connected to one another in the insertion position by means of a sleeve and/or an O-ring, wherein the sleeve and/or the O-ring form the detachable connecting means.

5. Fastening device according to claim 4,
**characterised in that**
in the retaining position, the sleeve and/or the O-ring is disposed outside the recess and/or serves as a marker.

6. Fastening device according to any of the preceding claims,
**characterised in that**
a contact area between the connection section (14) and the retaining element (22) does not comprise a planar surface or is not configured as a planar surface.

7. Fastening device according to any of the preceding claims,
**characterised in that**
the connection section (14) and the retaining element (22) do not lie against one other in a planar manner, at least not continuously, and/or
that a contact area between the connection section (14) and the retaining element (22) is kept small.

8. Fastening device according to any of the preceding claims,
**characterised in that**
a contact surface (16) of the connection section (14) is bent.

9. Fastening device according to any of the preceding claims,
**characterised in that**
the fastening device can be mounted without tools.

10. Fastening device according to any of the preceding claims,
**characterised in that**
the outer surface of the retaining element (22) coming into contact with the wall of the recess has a higher coefficient of friction than the outer surface of the connection section (14) coming into contact with the wall of the recess, especially wherein at least sections of the retaining element (22) have a roughened and/or rubberized surface.

11. Fastening device according to any of the preceding claims,
**characterised in that**
the retaining element (22) is pretensioned in the direction of insertion and/or the base (10) is pretensioned against the direction of insertion, and/or
**in that** the retaining element (22) can be clamped in the retaining position by a clamping means.

12. Fastening device according to any of the preceding claims,
**characterised in that**
the base (10) has a thread (18, 20) at an end region remote from the connection section (14), and/or
**in that** the base (10), preferably at an end region, comprises a container and/or a receiving recess for receiving a container, and/or
**in that** the base comprises at least one channel for a fastening means.

13. Fastening device according to any of the preceding claims,
**characterised in that**
the slotted guide (37) comprises a T-slot or dovetail-shaped slot.

14. Suspension system for fastening a ceiling, comprising a shaft (30) and a fastening device disposed on the shaft (30) according to any of the preceding claims, especially wherein a holder for holding a testing device is provided on the shaft (30).

15. A method for manufacturing a system comprising a fastening device according to any of the claims 1 to 13 and a supporting element, especially a shaft (30), wherein
a recess is made in the fastening device,
a retaining section of the supporting element is inserted into the recess, and the retaining section is fastened, preferably nondetachably, in the recess, especially by crimping.

## Revendications

1. Dispositif de fixation destiné à être inséré dans un évidement, en particulier dans un trou percé, comprenant une base (10) avec au moins une portion de liaison (14) et au moins un élément de retenue (22) mobile par rapport à la portion de liaison (14), dans lequel, dans une position d'insertion de l'élément de retenue (22), la section transversale totale de la portion de liaison (14) et de l'élément de retenue (22) est égale ou inférieure au diamètre de l'évidement, et lorsqu'une force dirigée en sens opposé à la direction d'insertion est appliquée, la section transversale totale de la portion de liaison (14) et de l'élément de retenue (22) est agrandie par un mouvement relatif entre l'élément de retenue (22) et la portion de liaison (14) de telle sorte que, dans une position de retenue de l'élément de retenue (22), le dispositif de fixation s'applique par coopération de force contre une paroi de l'évidement,
dans lequel
l'élément de retenue (22) et la portion de liaison (14) sont reliés entre eux en position d'insertion par un moyen de liaison détachable et sont libérés l'un de l'autre en position de retenue, et/ou
l'élément de retenue (22) et la portion de liaison (14) sont reliés ou peuvent être reliés entre eux par un guidage à coulisse (37),
l'élément de retenue est réalisé sous forme de cale (24) et
une surface de contact de l'élément de retenue (22) est incurvée,
la surface de contact est affectée à une zone de contact entre la portion de liaison (14) et l'élément de retenue (22).

2. Dispositif de fixation selon la revendication 1,
**caractérisé en ce que**
la surface de contact de l'élément de retenue (22), en particulier une zone avant de l'élément de retenue (22), est inclinée.

3. Dispositif de fixation selon la revendication 2,
**caractérisé en ce que**
l'élément de retenue (22) est réalisé de manière élastique par l'angulation.

4. Dispositif de fixation selon l'une des revendications précédentes,
**caractérisé en ce que**
l'élément de retenue (22) et la portion de liaison (14) sont reliés entre eux en position d'insertion par une douille et/ou par un joint torique, la douille et/ou le joint torique formant le moyen de liaison détachable.

5. Dispositif de fixation selon la revendication 4,
**caractérisé en ce que**
en position de retenue, la douille et/ou le joint torique est disposé(e) à l'extérieur de l'évidement et/ou sert de repère.

6. Dispositif de fixation selon l'une des revendications précédentes,
**caractérisé en ce que**
une zone de contact entre la portion de liaison (14) et l'élément de retenue (22) ne comporte pas de surface plane ou n'est pas réalisée en forme de surface plane.

7. Dispositif de fixation selon l'une des revendications précédentes,
**caractérisé en ce que**
la portion de liaison (14) et l'élément de retenue (22) ne sont pas superposés à plat, du moins pas en continu, et/ou
une zone de contact entre la portion de liaison (14) et l'élément de retenue (22) est de petite taille.

8. Dispositif de fixation selon l'une des revendications précédentes,
**caractérisé en ce que**
une surface de contact (16) de la portion de liaison (14) est incurvée.

9. Dispositif de fixation selon l'une des revendications précédentes,
**caractérisé en ce que**
le dispositif de fixation peut être monté sans outils.

10. Dispositif de fixation selon l'une des revendications précédentes,
**caractérisé en ce que**
la surface extérieure de l'élément de retenue (22) venant en contact avec la paroi de l'évidement présente un coefficient de friction plus élevé que celui de la surface extérieure de la portion de liaison (14) venant en contact avec la paroi de l'évidement, en particulier l'élément de retenue (22) ayant au moins localement une surface rugueuse et/ou caoutchoutée.

11. Dispositif de fixation selon l'une des revendications précédentes,
**caractérisé en ce que**
l'élément de retenue (22) est précontraint en direction d'insertion et/ou la base (10) est précontrainte en sens opposé à la direction d'insertion, et/ou l'élément de retenue (22) peut être serré en position de retenue par un moyen de serrage.

12. Dispositif de fixation selon l'une des revendications précédentes,
**caractérisé en ce que**
la base (10) comporte un filetage (18, 20) dans une zone d'extrémité détournée de la portion de liaison (14), et/ou
la base (10), de préférence dans une zone frontale, comprend un réceptacle et/ou un évidement de réception pour recevoir un réceptacle, et/ou la base comprend au moins un canal pour un moyen de fixation.

13. Dispositif de fixation selon l'une des revendications précédentes,
**caractérisé en ce que**
le guidage à coulisse (37) présente une rainure en T ou une rainure en forme de queue d'aronde.

14. Système de suspension pour la fixation d'un plafond, comportant une tige (30) et un dispositif de fixation selon l'une des revendications précédentes disposé sur la tige (30), en particulier un support pour le maintien d'un dispositif de contrôle étant prévu sur la tige (30).

15. Procédé de fabrication d'un système comportant un dispositif de fixation selon l'une des revendications 1 à 13 et un élément de support, en particulier une tige (30),
dans lequel
un évidement est ménagé dans le dispositif de fixation,
une portion de retenue de l'élément de support est insérée dans ledit évidement, et
la portion de retenue est fixée, en particulier sertie, de préférence de manière inamovible dans ledit évidement.
